(19) **Europäisches Patentamt / European Patent Office / Office européen des brevets**

(11) **EP 1 702 445 B1**

(12) **EUROPEAN PATENT SPECIFICATION**

(45) Date of publication and mention
of the grant of the patent:
**16.05.2007 Bulletin 2007/20**

(21) Application number: **04798923.1**

(22) Date of filing: **19.11.2004**

(51) Int Cl.:
**H04L 27/26** *(2006.01)*    **G06F 17/14** *(2006.01)*

(86) International application number:
**PCT/IB2004/003799**

(87) International publication number:
**WO 2005/076557 (18.08.2005 Gazette 2005/33)**

(54) **MODULATION AND DEMODULATION OF OFDM SIGNALS**

MODULATION UND DEMODULATION VON OFDM-SIGNALEN

MODULATION ET DEMODULATION DE SIGNAUX MDFO

(84) Designated Contracting States:
**AT BE BG CH CY CZ DE DK EE ES FI FR GB GR HU IE IS IT LI LU MC NL PL PT RO SE SI SK TR**

(30) Priority: **06.01.2004 EP 04405006**

(43) Date of publication of application:
**20.09.2006 Bulletin 2006/38**

(73) Proprietor: **International Business Machines Corporation
Armonk, NY 10504 (US)**

(72) Inventors:
 • **FURRER, Simeon**
  CH-8134 Adliswil (CH)
 • **JELITTO, Jens**
  CH-8803 Rueschlikon (CH)
 • **SCHOTT, Wolfgang**
  CH-8803 Rueschlikon (CH)
 • **WEISS, Beat**
  CH-6313 Edlibach (CH)

(74) Representative: **Klett, Peter Michael et al
IBM Research GmbH
Zurich Research Laboratory
IP Law,
Säumerstrasse 4 / Postfach
8803 Rüschlikon (CH)**

(56) References cited:
**EP-A2- 0 668 678**

 • **E CHU ET AL: "Inside the FFT black box" [Online] 2000, CRC PRESS , BOCA RATON , XP002314648 Retrieved from the Internet: URL:http: //www.engnetbase.com/books/735/02 70_pdf_ toc.pdf> [retrieved on 2005-01-24] Chapter 14**
 • **R MATUSIAK: "Implementing Fast Fourier Transform Algorithms of Real-Valued Sequences with the TMS320 DSP Family" TEXAS INSTRUMENTS, APPLICATION REPORT SPRA291, December 1997 (1997-12), XP002314647 Retrieved from the Internet: URL: http://www.eetkorea.com/ARTICLES/2001M AY/ 2001MAY07_DSP_EMS_AN.PDF> [retrieved on 2005-01-24]**
 • **BOTARO HIROSAKI: "AN ORTHOGONALLY MULTIPLEXED QAM SYSTEM USING THE DISCRETE FOURIER TRANSFORM" IEEE TRANSACTIONS ON COMMUNICATIONS, IEEE INC. NEW YORK, US, vol. 29, no. 7, July 1981 (1981-07), pages 982-989, XP000568062 ISSN: 0090-6778**

**Description**

TECHNICAL FIELD

The present invention is related to a method and device for modulation and for demodulation of OFDM signals.

BACKGROUND OF THE INVENTION

Orthogonal frequency-division multiplexing (OFDM) has become an attractive signaling scheme for high-speed, broadband communication systems. In OFDM based systems, the user data stream is split into parallel streams of reduced rate. Each obtained substream then modulates a separate sub-carrier. By appropriately choosing the frequency spacing between the sub-carriers, the carriers are made orthogonal and some spectral overlap between the sub-carriers is permitted, leading to a high spectral efficiency. Recent wireless standards like IEEE 802.11 a/g, ETSI Hiperlan/2 and ETSI DAB/DVB-T apply OFDM to combat multipath fading with a moderate receiver complexity, while wired standards such as ANSI xDSL exploit OFDM's potential for dynamic bit-allocation and power-control on individual sub-carriers.

A typical implementation of the OFDM-related part of an IEEE 802.11a-compliant transmitter comprises a modulation mapping unit, an inverse fast Fourier transform (IFFT) unit and a parallel-to-serial unit. Incoming data bits are encoded and mapped on 48 data sub-carriers out of N=64 sub-carriers using either phase-shift keying (BPSK, QPSK) or quadrature-amplitude-modulation (16-QAM, 64-QAM). The complex baseband (BB) OFDM signal comprises an in-phase (I) and a quadrature (Q) component and is generated by a 64-point inverse discrete Fourier transform (IDFT), implemented as an inverse fast Fourier transform (IFFT) with subsequent cyclic prefix extension and parallel-to-serial conversion in the parallel-to-serial unit. For example, a common OFDM modulator is known from US 6,304,611 B1.

After the digital-to-analogue conversion (DAC) of the obtained complex BB OFDM signal and low-pass filtering, an analogue I/Q modulator, which is driven by a carrier signal provided by an oscillator, generates the OFDM bandpass signal. After analogue filtering and amplification, the signal is transmitted in the radio frequency (RF) band over the air. Optionally, an additional mixing stage from an intermediate frequency (IF) band to the RF band is applied in heterodyne radio frontends.

Alternative implementations move the DAC to an IF band and use a digital I/Q modulator. This approach avoids amplitude, phase and delay imbalances due to filter and clock phase imperfections in the analogue I/Q modulation branches but increases the required sampling frequency. The additional digital interpolation filters can either be realized as finite impulse response (FIR) filters or be included into a larger IFFT unit by increasing the number of (unused) sub-carriers.

An OFDM receiver reverses the operation of the transmitter. Again, either an analogue or digital I/Q demodulation is feasible. In addition, pre-FFT synchronisation algorithms are used at the receiver side to estimate and adjust the correct gain setting of a variable gain amplifier (VGA) in the radio frontend, the frequency offset between transmit and receive clocks and the OFDM symbol timing.

Document EP-A2-0 668 678 (ITALTEL SOCIETA ITALIANA TELECOMUNICAZIONI S.P.A) 23 August 1995 (1995-08-23) discloses a method for modulating sub-carrier symbols to an intermediate frequency OFDM signal comprising the steps of preprocessing (data staggering and premodulation, see col. 6, lines 1-32), performing a complex N-point IDFT, and further processing by using Hermitian Symmetry Extractors, filtering and parallel-to-serial conversion. This method involves transformations of high complexity after the IDFT.

One disadvantage of the analogue I/Q modulation and demodulation is that two analogue branches are required for the processing of the analogue complex baseband signals. This requires analogue components which can lead to an imbalance between the in-phase and the quadrature components. The estimation and compensation of the I/Q imbalance is expensive and leads to a gap between practical performance and theoretical performance.

The disadvantages of the digital I/Q modulation are that the sampling rate is higher than by an analogue I/Q modulation and that the complexity of the digital parts of the mixing stage is increased.

It is an object of the present invention to provide a new method for modulating and demodulating of OFDM signals, thereby avoiding the disadvantages indicated above. It is a further object of the present invention to provide devices for modulation and demodulation of OFDM signals.

SUMMARY OF THE INVENTION

The disadvantages are overcome by the methods for modulating and demodulating as well as by the devices for modulation and for demodulation of OFDM signals. Preferred embodiments of the present invention are indicated in the dependant claims.

According to a first aspect of the present invention, a method for modulating sub-carrier symbols to an intermediate-frequency OFDM signal having even and odd samples is provided. Firstly, a number N of sub-carrier symbols is transformed to pre-processed sub-carrier symbols. A complex inverse discrete Fourier transform (IDFT) on the pre-processed sub-carrier symbols is then performed to generate complex output symbol. The complex output symbols are then transformed to the intermediate-frequency OFDM signal. The sub-carrier symbols are transformed so that the even and odd samples of the intermediate-frequency OFDM signal are given by the real and imaginary parts of the complex output symbols.

One idea of the present invention lies in the pre-processing of the sub-carrier symbols in a way that the inverse discrete Fourier transform, also referred to as transformation, generates output symbols wherein the real as well as the imaginary part can be interpreted as a series of real samples of the intermediate-frequency OFDM signal. Thereby, the disadvantages caused by imbalance between the in-phase and the quadrature component of the complex output symbol while transforming them to the intermediate-frequency OFDM signal can be avoided. The pre-processing of the sub-carrier symbols is performed in a manner that complex output symbols are generated by the IDFT as known from the prior art but wherein the real and imaginary parts of the complex output symbols are multiplexed to real samples of the intermediate-frequency OFDM signal.

Preferably, the transforming of the sub-carrier symbols to pre-processed sub-carrier symbols is performed according to the following function:

$$ Z(k) = \frac{1}{2} \cdot \left[ F(k) + F(N-k)^* \right] + \frac{1}{2} \cdot j \cdot \left[ F(k) - F(N-k)^* \right] \cdot e^{+j\pi k/N} $$

wherein F(k) are sub-carrier symbols and Z(k) are pre-processed sub-carrier symbols for k=0...N-1. This function is the preferred function to perform the pre-processing of the sub-carrier symbols and allows obtaining the intermediate-frequency OFDM signal as desired according to the present invention.

It can be provided that the complex inverse discrete Fourier transformation is usually performed as an inverse fast Fourier transformation which is commonly known and which is to be preferred because the processing can be performed efficiently.

Preferably, the modulation of the sub-carrier symbols to the intermediate-frequency OFDM signal includes that the sub-carrier symbols are assigned to a spectrum F(i) with i=0... 2N-1 of the real valued intermediate-frequency OFDM signal f(n) with n=0...2N-1, wherein the negative frequency contents can be derived from the symmetry property spectra of real sequences, F(i) = F(2N-i)*. Furthermore, the spectrum F(k), with k=0...N-1 is converted to pre-processed complex sub-carrier symbols Z(k) using the symmetry property of spectra of real sequences, wherein Z(k) = X(k) + j·Y(k), with X(k) and Y(k) defining the spectra of real sequences x(n) and y(n). The inverse discrete Fourier transformation transforms the pre-processed complex sub-carrier symbols Z(k) into the complex output symbols z(n)=x(n)+ j·y(n). Preferably the transforming of the complex output symbols is performed by multiplexing the real and the imaginary parts of the complex complex output symbols to a stream of even and odd samples of the intermediate-frequency OFDM signals.

According to another aspect of the present invention, a method for demodulating an intermediate-frequency OFDM signal having even and odd samples to sub-carrier symbols is provided. The intermediate-frequency OFDM signal is transformed into complex input symbols wherein the even and odd samples are associated to the real and imaginary parts of the complex input symbols. A complex discrete Fourier transformation of the complex input symbols is performed to generate complex DFT output symbols. The complex DFT output symbols are further transformed to post-processed sub-carrier symbols.

The method for demodulating the intermediate-frequency OFDM signal provides the inverse operation related to the method for modulating as described above. The even and odd samples of an incoming intermediate-frequency OFDM signal are associated to the real and imaginary part of the complex input symbols for a discrete Fourier transformation. The results of the discrete Fourier transformation are post-processed to sub-carrier symbols.

The post-processing is preferably carried out according to the following function:

$$ F(k) = \frac{1}{2} \cdot \left[ Z(k) + Z(N-k)^* \right] - \frac{1}{2} \cdot j \cdot \left[ Z(k) - Z(N-k)^* \right] \cdot e^{-j\pi k/N} . $$

The discrete Fourier transformation can be performed as a fast Fourier transformation.

Preferably, the demodulation of the real intermediate-frequency signal to sub-carrier symbols is performed by the following steps. First, the even and odd samples of the intermediate-frequency OFDM signal f(n) are demultiplexed onto the real and imaginary parts of the complex DFT input symbols z(n)=x(n) + j x y(n) with x(n)=f(2n), y(n)=f(2n+1), and n=0...N-1. The complex discrete Fourier transformation of the complex input symbols z(n) into complex output symbols Z(k)=X(k) + j·Y(k) with k=0...N-1 is performed wherein X(k) and Y(k) are the spectra of the real sequences x(n) and y(n). The complex output symbols Z(k) with k=1...N-1 are post-processed to the spectrum

$$F(k) = X(k) + e^{-j\pi \cdot \frac{k}{N}} Y(k)$$ of the real valued intermediate-frequency OFDM signal f(n). The spectrum F(k) with k=1...N-1 of the real valued IF signal f(n) is assigned to the associated sub-carrier symbols.

According to another aspect of the present invention, an orthogonal frequency-division multiplexing modulator for modulating sub-carrier symbols to an intermediate-frequency OFDM signal having even and odd samples is provided. The modulator comprises first means for transforming a number N of the sub-carrier symbols to pre-processed sub-carrier symbols. It further comprises DFT means for performing a complex inverse discrete Fourier transformation (IDFT) of the pre-processed sub-carrier symbols to generate complex output symbols. Furthermore, second means for transforming the complex output symbols to the intermediate-frequency OFDM signal is provided. The sub-carrier symbols are transformed in the means for transforming so that the even and odd samples of the intermediate-frequency OFDM signal are given by the real and imaginary parts of the complex output symbols.

Thereby, a modulator for modulating sub-carrier symbols to an intermediate-frequency OFDM signal is provided which operates according to the method of modulating according to the present invention.

Preferably, the first means for transforming include means for assigning the sub-carrier symbols to a spectrum of the real valued OFDM signal wherein the negative frequency contents can be derived from the symmetry property of spectra of real sequences. The first means for transforming further comprises means for converting the spectrum to pre-processed complex sub-carrier symbols using the symmetry property of spectra of real sequences.

According to a preferred embodiment of the present invention, the first means for transforming and the IDFT means are integrated in one device.

According to another aspect of the present invention, an orthogonal frequency-division multiplex demodulator for demodulating an intermediate-frequency OFDM signal having even and odd samples to sub-carrier symbols is provided. The demodulator includes means for transforming the intermediate-frequency OFDM signal to complex input symbols wherein the even and odd samples are associated to the real and imaginary part of the complex input symbols. Using DFT means a complex discrete Fourier transformation is performed on the complex input symbols to generate complex DFT output symbols. By means for transforming the complex DFT output symbols post-processed sub-carrier symbols are generated.

The demodulator thereby comprises means to perform the method for demodulating according to the present invention.

DESCRIPTION OF THE DRAWINGS

Embodiments of the present invention are described in more detail together with the accompanying drawings, wherein

Figure 1 shows a prior art OFDM modulator;

Figure 2 shows a OFDM modulator according to one embodiment of the present invention;

Figure 3 shows an illustration of the step of assigning the sub-carrier symbols to a spectrum of real valued intermediate-frequency OFDM signals; and

Figure 4 an OFDM demodulator according to another embodiment of the present invention.

DETAILED DESCRIPTION OF EMBODIMENTS

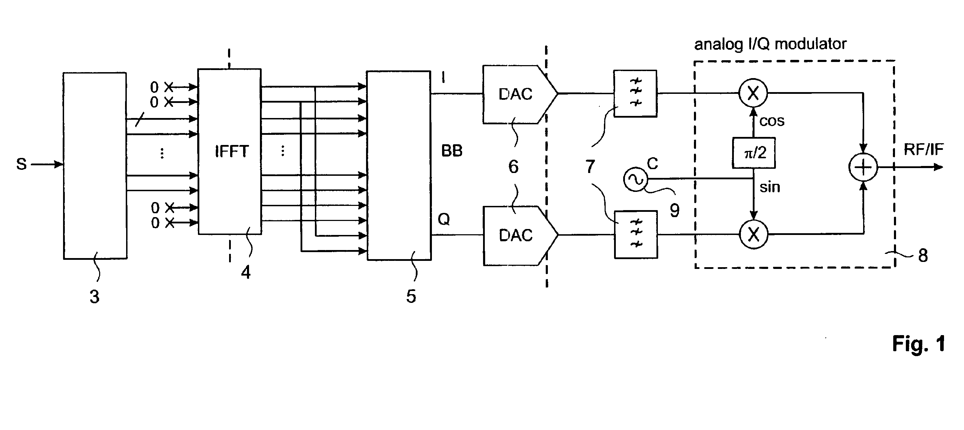

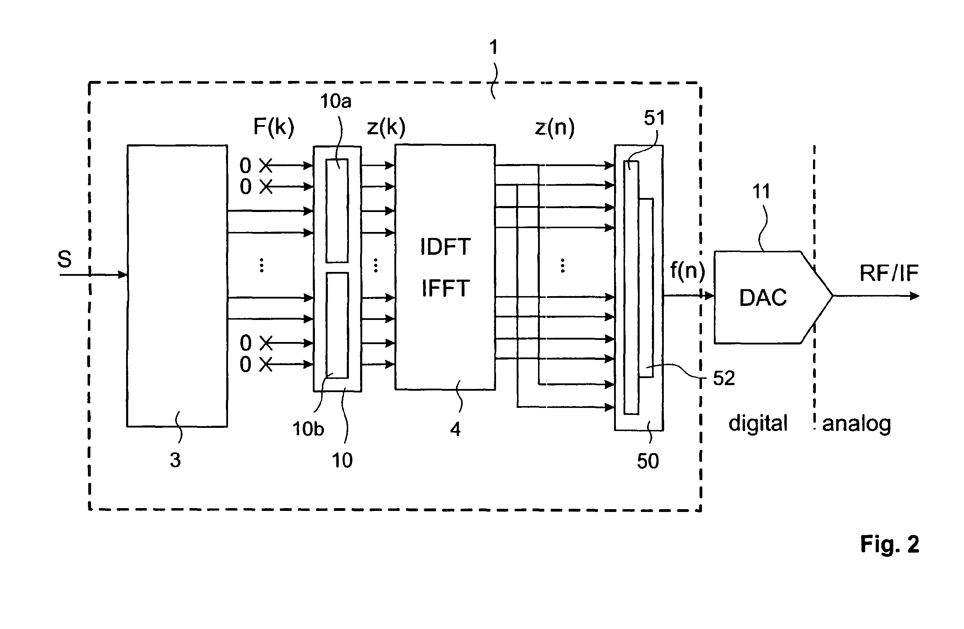

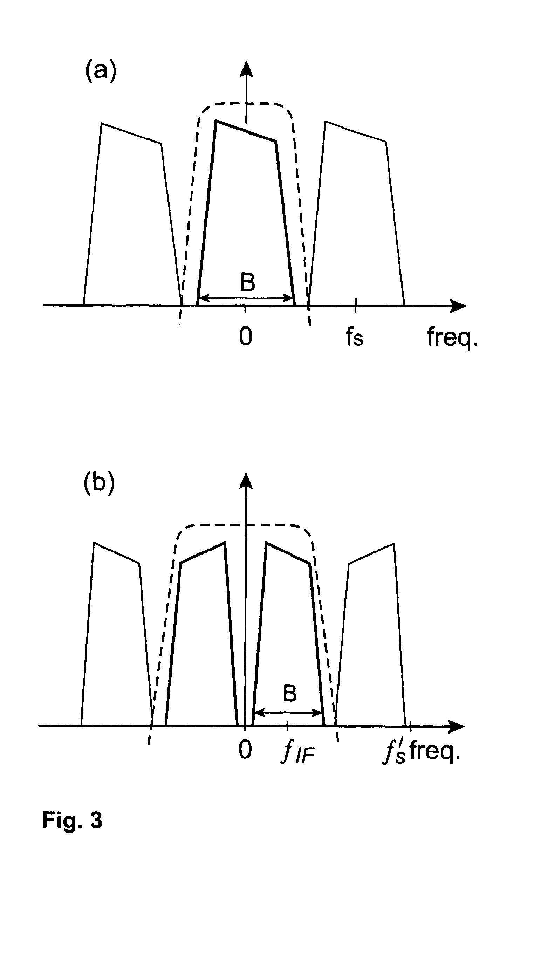

In Figure 1, a typical implementation of an OFDM modulator according to the prior art is depicted. The OFDM modulator comprises a modulation mapping unit 3. A stream S of incoming data bits is encoded to a number of complex symbols using phase-shift-keying (BPSK, QPSK) or quadrature-amplitude-modulation (16-QAM, 64-QAM) and mapped onto K data sub-carriers out of N sub-carriers by the modulation mapping unit 3. Additional sub-carriers can be reserved for pilot (training) tones while the DC sub-carrier is usually unused to avoid difficulties with converter offsets. The remaining sub-carriers are unused and produce spectral guard bands to reduce out-off-band interference and to relax radio-frontend filter requirements.

These so-called sub-carrier symbols are then fed into an IFFT unit 4 to perform a N point inverse discrete Fourier transformation (IDFT), thereby generating a complex baseband (BB) OFDM signal comprising an in-phase (I) and a quadrature (Q) component of complex output symbols. The inverse discrete Fourier transformation is commonly performed as a fast Fourier transformation with subsequent cyclic prefix extension. The complex output symbols are fed in a parallel-to-serial converter 5 to obtain a serial stream of complex digital baseband signals comprising real and imaginary parts I, Q.

The real and imaginary parts I, Q of the complex complex digital baseband signals are then forwarded each to a digital-to-analogue conversion unit 6 to convert the digital values to respective analogue values each of them then low pass filtered in filter 7 and modulated in an analogue I/Q modulator 8, which is driven by a carrier signal C provided by an oscillator 9. The output of the I/Q modulator 8 generates the OFDM bandpass signal. After analogue filtering and amplification, the signal is transmitted in the radio frequency (RF) band over the air. Optionally, an additional mixing stage from an intermediate frequency (IF) band to the RF band is applied in heterodyne radio frontends.

Alternative implementations move the digital-to-analogue conversion unit to the intermediate frequency band and use a digital I/Q modulator. This approach avoids the disadvantages of amplitude, phase and delay imbalances due to filter and clock phase imperfections in the analogue I/Q modulation branches but increases the required sampling frequency. The additional digital interpolation filters can either be realized as FIR filters or be included into a larger IFFT by increasing the number of unused sub-carriers.

A common OFDM demodulator reverses the operations of the OFDM modulator. Again, either an analogue or digital I/Q demodulation is feasible. In addition, synchronization algorithms are required at the demodulator to estimate and adjust the correct gain setting of the variable gain amplifier in the radio frontend, the frequency offset between transmit and receive clocks and the OFDM symbol timing.

Figure 2 shows a preferred embodiment of an OFDM modulator according to the present invention. The OFDM modulator according to the invention substantially comprises similar parts as included in a common OFDM modulator, such as the modulation mapping unit 3 to encode and to map the incoming stream of data bits to complex sub-carrier symbols as known from prior art. Also, the IFFT unit 4 as known from the conventional OFDM modulator is used to generate complex IDFT output symbols $z(n)$. Same reference numbers are used to indicate the same functional blocks or units. As the setup for modulation and demodulation is approximately symmetrical, the corresponding formula signs within the specification are chosen to be identical.

A second transforming means 50 comprises a parallel-to-serial unit 51 and a multiplexer 52 which in order serialize the complex IDFT output symbols $z(n)$ and multiplex the real and imaginary parts of $z(n)$ into even and odd samples of the intermediate-frequency OFDM signal.

Between the modulation mapping unit 3 and the IFFT unit 4, a pre-processing unit 10 is introduced to perform a pre-processing of the complex sub-carrier symbols at the output of the modulation mapping unit 3 and to generate pre-processed complex sub-carrier symbols to be fed into the IFFT unit 4. The pre-processing unit 10 comprises an assigning means 10a that basically is an assign unit 10a which assigns the sub-carrier symbols to a spectrum $F(i)$ with $i=0...2N-1$ of the intermediate-frequency OFDM signal. Negative frequency contents are derived from the symmetry property of spectra of real sequences, i.e. $F(i)=F(2N-i)^*$. The pre-processing unit 10 further comprises converter means 10b, i.e. a converter that converts the sub-carrier symbols to the pre-processed complex sub-carrier symbols by using the symmetry property of spectra of real sequences.

In the pre-processing unit 10, an operation according to the following procedure is performed. Given the frequency of the intermediate frequency as $f_{IF} = n\, f_C$ wherein $n > \lfloor B/(2\, f_C) \rfloor$ represents an integer value and $\lfloor\ \rfloor$ defines the floor operator, $f_C$ the sub-carrier frequency separation, and $B$ the OFDM signal bandwidth, it is possible according to the method of the present invention to remove the digital I/Q modulation and use the IFFT unit 4 together with the pre-processing unit 10 and the parallel-to-serial unit 51 to directly generate the intermediate-frequency OFDM signal, also referred to as IF signal. This signal is also contemplated as a real valued intermediate-frequency OFDM signal.

One concept of the invention to create the real valued intermediate-frequency OFDM signal directly by using IFFT means is outlined in the following paragraph.

The spectrum shown in Figure 3a is periodic with a periodicity given by the sampling frequency $f_S$. An N-point-IFFT unit covering one period is used to transform the complex BB OFDM signal from the frequency to time domain. The spectrum shown in Figure 3b can be obtained without a digital I/Q modulation by, first, doubling the sampling clock frequency to $f'_S = 2f_S$, second, shifting the center frequency of the original spectrum to $f_{IF}$, and third, introducing components to the resulting spectrum to enforce the symmetry property as required for real sequences $x(n)$. The output of an inverse Fourier transformation contains only real values if the spectrum on the input side includes a symmetry according to $FFT_N (x, f) = FFT_N (N-k, x)^*$.

To convert this spectrum, the size of the used IFFT unit is increased to 2N in principle.

Given that a low IF frequency is selected, i.e. $n < N - \lfloor B/(2\, f_C) \rfloor$, a intermediate-frequency OFDM signal comprising 2N real values can be generated.

As shown in the following, a single N-point complex fast Fourier transform (FFT) with an additional butterfly stage can be used to evaluate two N-point real FFTs or one 2N-point real FFT. The $N$ point FFT of a sequence z(n) is defined as

$$Z(k) = FFT_N(k,z) = \frac{1}{\sqrt{N}} \sum_{n=0}^{N-1} z(n)e^{-j2\pi kn/N}$$

with $k = 0... N - 1$. In the sequel, two symmetry properties of the FFT will be useful. For a complex (or real) sequence z(n), the property

$$FFT_N(k,z^*) = FFT_N(N-k,z)^*$$

holds, while the Fourier transform of a real sequence x(n) is additionally conjugate-symmetric, i.e.

$$FFT_N\ (k,\ x)\ =\ FFT_N\ (N\text{-}k,\ x)^* \rightarrow X(k) = X(N-k)^*\ .$$

A single N-point complex FFT can be used to evaluate the N-point FFT of two real sequences x(n) and y(n) simultaneously. A complex sequence is defined by:

$$z(n) = x(n) + jy(n)\ .$$

Solving for x(n) and y(n) one gets

$$x(n) = \frac{1}{2}[z(n) + z(n)^*]\ ,$$

$$y(n) = -\frac{1}{2}j[z(n) - z(n)^*]\ .$$

Evaluating the FFT and applying the symmetry property leads to the result

$$X(k) = FFT_N(k,x) = \frac{1}{2}[FFT_N(k,z) + FFT_N(N-k,z)^*]$$

$$Y(k) = FFT_N(k, y) = -\frac{1}{2} j[FFT_N(k, z) - FFT_N(N - k, z)^*] \,.$$

So the transforms can be easily extracted by a simple butterfly stage after the FFT.

To extend this scheme to evaluate a 2N point FFT of a real sequence f(n) using a N-point complex FFT, x(n) = f(2n) is defined as the even samples and y(n) = f(2n+1) as the odd samples and again z(n)=x(n)+jy(n). From the FFT's linearity and time-shift property

$$F(k) = FFT_{2N}(k, f) = X(k) + e^{-j\pi k/N} Y(k)$$

can be derived, which finally gives the butterfly function.

$$F(k) = \frac{1}{2}[\{Z(k) + Z(N - k)^*\} - j\{Z(k) - Z(N - k)^*\}e^{-j\pi k/N}]$$

for k=0...N-1. The remaining (redundant) values for k=N...2N-1 are determined by the symmetry property of real sequences.

Thus, a single N point complex FFT with an additional butterfly stage can be used to evaluate two N point real FFTs or one 2N point real FFT.

The pre-processing stage 10 of the OFDM modulator according to the present invention preferably carries out the following operation, which can be obtained accordingly as the inverse operation of the above butterfly function:

$$Z(k) = \frac{1}{2} \cdot \left[F(k) + F(N - k)^*\right] + \frac{1}{2} \cdot j \cdot \left[F(k) - F(N - k)^*\right] \cdot e^{+j\pi k/N} \,,$$

wherein k=0...N-1 and F(k) is the data symbol to be modulated onto sub-carrier k.

The output of the IFFT unit 4 has real and imaginary parts wherein the real parts of the complex output symbols z(n) are interpreted as the even samples and the imaginary part as the odd samples. This can be performed by a multiplexer which is preferably included into the parallel-to-serial unit 5a. The output of the multiplexer is connected to a single digital-to-analogue converter unit 11 which directly generates the intermediate-frequency OFDM signal by using a double sampling rate.

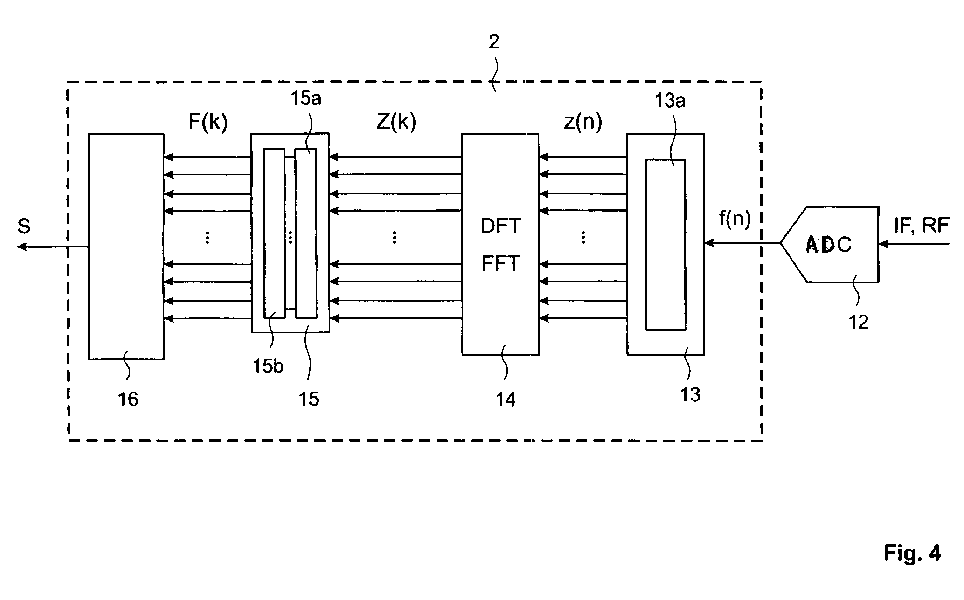

In Figure 4, a demodulator for OFDM signals is shown. The received intermediate-frequency OFDM signal is converted by an analogue-to-digital converter unit 12 into a signal stream f(n) which is fed into a third transformer 13 which transforms the intermediate-frequency OFDM signal to complex input symbols. The third transformer 13 comprises a de-multiplexer 13a that de-multiplexes the even and odd samples of the intermediate-frequency OFDM signal onto the real and imaginary parts of the complex DFT input symbols. In other words, the third transformer 13 with the de-multiplexer 13a associate the even and odd samples with the real and imaginary part I, Q of the complex input symbols z(n). The complex input symbols are then fed to a FFT unit 14 to perform a fast Fourier transformation on the complex input symbols to obtain sub-carrier symbols Z(k).

Substantially, a fourth transformer 15 performs the post-processing of the complex DFT output symbols Z(k) to post-processed sub-carrier symbols F(k), for example according to the function as determined above:

$$F(k) = \frac{1}{2} \cdot \left[ Z(k) + Z(N-k)^* \right] - \frac{1}{2} \cdot j \cdot \left[ Z(k) - Z(N-k)^* \right] \cdot e^{-j\pi k / N}$$

The fourth transformer 15 comprises a post-processing means 15a that post-processes the complex DFT output symbols Z(k) with k=1...N-1 to the spectrum F(k)= X(k)+exp(-j*pi*k/N)*Y(k) of the intermediate-frequency OFDM signal. The fourth transformer 15 further comprises an assigning means 15b that assigns the post-processed sub-carrier symbols to an order for further processing. The assigning means 15b can include a table which refers to standardized symbols.

In a demodulation-demapping unit 16, the post-processed sub-carrier symbols F(k) are serialized and decoded so that a data stream S of output bits can be achieved.

The method for modulating and demodulating according to the present invention has the advantage that any I/Q imbalances due to digital I/Q modulation or demodulation can be avoided with a reduced complexity of the units or devices. Compared to the analogue I/Q modulation approach, only a single digital-to-analogue converter unit but with a double clock rate is used. The same is true for the demodulation approach, where only a single analogue-to-digital converter unit is applied.

The IFFT unit 4 and the FFT unit 14 can be combined with an additional pre-processing stage 10 and post-processing stage 15, respectively. IFFT unit 4 and pre-processing stage 10 can be combined in a tailored IFFT operable to perform the IFFT as well as the pre-processing of the complex input symbol. In the same way, the FFT unit 14 and the post-processing stage 15 can be combined in a tailored FFT unit which is operable to perform the FFT and the post-processing to achieve the post-processed output symbols. Tailored IFFT unit and tailored FFT unit can be designed as an integrated circuit.

The intermediate frequency $f_{IF}$ can be chosen on a grid of N times the sub-carrier spacing $f_C$ with N > [B/(2$f_C$)] as an integer. This allows trading of complexity between analogue and digital filters. Oversampling architectures to relax filter requirements are possible, as well.

**Claims**

1. A method for modulating sub-carrier symbols F(k) to an intermediate-frequency OFDM signal (f(n)) having even and odd samples, the method comprising the steps of:

   - transforming a number N of the sub-carrier symbols F(k) to pre-processed sub-carrier symbols Z(k) according to the function:

$$Z(k) = \frac{1}{2} \cdot \left[ F(k) + F(N-k)^* \right] + \frac{1}{2} \cdot j \cdot \left[ F(k) - F(N-k)^* \right] \cdot e^{+j\pi k / N}$$

   with k=0...N-1;
   - performing a complex N-point inverse discrete Fourier transformation, IDFT, on the pre-processed sub-carrier symbols Z(k) to generate complex output symbols z(n); and
   - transforming the complex output symbols z(n) to the intermediate-frequency OFDM signal (f(n)), by multiplexing the real and imaginary parts of the complex output symbols z(n) into even and odd samples of the intermediate-frequency OFDM signal (f(n)).

2. Method according to claim 1 further comprising the steps of:

   - assigning the sub-carrier symbols F(k) to a spectrum F (i) with i=0...2N-1 of the intermediate-frequency OFDM signal (f(n)), negative frequency contents being derivable from the symmetry property of spectra of real sequences, F(i)=F(2N-i)*;
   - converting the sub-carrier symbols F(k), with k=0...N-1, to the pre-processed complex sub-carrier symbols Z (k) using the symmetry property of spectra of real sequences, wherein Z(k)=X(k)+j*Y(k) with X(k) and Y(k) defining the spectra of real sequences x(n) and y(n); and

- performing the complex inverse discrete Fourier transformation, IDFT, of the pre-processed complex sub-carrier symbols z(k) into the complex output symbols z(n) = x(n)+j*y(n).

3. Method according to any preceding claim, wherein the complex inverse discrete Fourier transformation, IDFT, is performed as an inverse fast Fourier transformation, IFFT.

4. A method for demodulating an intermediate-frequency OFDM signal (f(n)) having even and odd samples to post-processed sub-carrier symbols F(k), the method comprising the steps of:

- transforming the intermediate-frequency OFDM signal (f(n)) to complex input symbols z(n), by de-multiplexing the even and odd samples of the intermediate-frequency OFDM signal (f(n)) onto the real and imaginary parts of the complex input symbols z(n)=x(n)+j*y(n) with x(n)=f(2n) and y(n)=f(2n+1) with n=0...N-1;
- performing a complex discrete Fourier transformation, DFT, on the complex input symbols z(n) to generate complex DFT output symbols Z(k); and
- transforming the complex DFT output symbols Z(k) to the post-processed sub-carrier symbols F(k) according to the function:

$$F(k) = \frac{1}{2} \cdot \left[ Z(k) + Z(N-k)^* \right] - \frac{1}{2} \cdot j \cdot \left[ Z(k) - Z(N-k)^* \right] \cdot e^{-j\pi k / N}$$

with k=0...N-1.

5. Method according to claim 4, wherein the complex discrete Fourier transformation, DFT, is performed as a fast Fourier transformation, FFT.

6. Method according to one of the claims 4 or 5, further comprising the steps of:

- performing the complex discrete Fourier transformation, DFT, of the complex input symbols z (n) into the complex DFT output symbols Z(k)=X(k)+j*Y(k) with k=0...N-1, x(k) and Y(k) being the spectra of the real sequences x(n) and y(n);
- post-processing of the complex DFT output symbols Z(k) with k=1...N-1 to the post-processed sub-carrier symbols F(k)= X(k) +$e^{-j\pi k/N}$·Y(k) of the intermediate-frequency OFDM signal (f(n)); and
- assigning the post-processed sub-carrier symbols F(k) to an order for further processing.

7. A computer program element comprising program code means for performing the method of any one of the claims 1 to 7 when said program is run on a computer.

8. A computer program product stored on a computer usable medium, comprising computer readable program means for causing a computer to perform the method according to any one of the claims 1 to 7.

9. An orthogonal frequency division multiplex modulator (1) for modulating sub-carrier symbols F(k) to an intermediate-frequency OFDM signal (f(n)) having even and odd samples, the modulator comprising:

- first transforming means (10) for transforming a number N of the sub-carrier symbols F(k) to pre-processed sub-carrier symbols Z(k), adapted to perform the function:

$$Z(k) = \frac{1}{2} \cdot \left[ F(k) + F(N-k)^* \right] + \frac{1}{2} \cdot j \cdot \left[ F(k) - F(N-k)^* \right] \cdot e^{+j\pi k / N}$$

with k=0...N-1;
- IDFT means (4) for performing a complex inverse discrete Fourier transformation, IDFT, on the pre-processed sub-carrier symbols Z(k) to generate complex output symbols z(n); and
- second transforming means (50) comprising a multiplexing means (52) for multiplexing of the real and imaginary parts of the complex output symbols z(n) into even and odd samples of the intermediate-frequency OFDM signal (f(n)).

**10.** Orthogonal frequency division multiplex modulator (1) according to claim 9, wherein the IDFT means (4) exhibits the functionality to perform an inverse fast Fourier transformation, IFFT.

**11.** Orthogonal frequency division multiplex modulator (1) according to one of the claims 9 or 10, wherein the first transforming means (10) further comprises:

- assigning means (10a) for assigning the sub-carrier symbols F(k) to a spectrum F(i) with i=0...2N-1 of the intermediate-frequency OFDM signal (f(n)), negative frequency contents being derivable from the symmetry property of spectra of real sequences, F(i)=F(2N-i)*;
- converter means (10b) for converting the sub-carrier symbols F(k), with k=0...N-1, to the pre-processed complex sub-carrier symbols Z(k) using the symmetry property of spectra of real sequences, where Z(k)=X(k)+j*Y(k) with X(k) and Y(k) defining the spectra of real sequences x(n) and y (n) .

**12.** Orthogonal frequency division multiplex modulator (1) according to one of the claims 9 to 11, wherein the IDFT means (4) is adapted to perform the complex inverse discrete Fourier transformation, IDFT, of the pre-processed complex sub-carrier symbols Z(k) into the complex output symbols z(n) = x(n)+j*y(n).

**13.** Orthogonal frequency division multiplex modulator (1) according to one of the claims 9 to 12, wherein the first transforming means (10) and the IDFT means (4) are integrated in one device.

**14.** An orthogonal frequency division multiplex demodulator (2) for demodulating an intermediate-frequency OFDM signal (f(n)) having even and odd samples to post-processed sub-carrier symbols F(k), the demodulator comprising:

- third transforming means (13) comprising de-multiplexer means (13a) for de-multiplexing the even and odd samples of the intermediate-frequency OFDM signal (f(n)) onto the real and imaginary parts of the complex DFT input symbols z(n)=x(n)+j*y(n) with x(n)=f(2n) and y(n)=f(2n+1),with n=0...N-1;
- DFT means (14) for performing a complex discrete Fourier transformation on the complex input symbols z(n) to generate complex DFT output symbols Z(k);
- fourth transforming means (15) for transforming the complex DFT output symbols Z(k) to the post-processed sub-carrier symbols F(k), adapted to perform the function:

$$F(k) = \frac{1}{2} \cdot \left[ Z(k) + Z(N-k)^{*} \right] - \frac{1}{2} \cdot j \cdot \left[ Z(k) - Z(N-k)^{*} \right] \cdot e^{-j\pi k/N}$$

with k=0...N-1.

**15.** Orthogonal frequency division multiplex demodulator (2) according to claim 14, wherein the DFT means (14) exhibits the functionality to perform a fast Fourier transformation, FFT.

**16.** Orthogonal frequency division multiplex demodulator (2) according to one of the claims 14 or 15, wherein the DFT means (14) is adapted to perform the complex discrete Fourier transformation DFT, of the complex input symbols z (n) into complex DFT output symbols Z(k)=X(k)+j*Y(k), with k=0...N-1, where X(k) and Y(k) are the spectra of the real sequences x(n) and y(n).

**17.** Orthogonal frequency division multiplex demodulator (2) according to one of the claims 14 to 16, wherein the fourth transforming means (15) further comprises:

- post-processing means (15a) for post-processing of the complex DFT output symbols Z(k), with k=1...N-1, to the post-processed sub-carrier symbols F(k)= X(k)+exp(-j*pi*k/N)*Y(k) of the intermediate-frequency OFDM signal (f(n));
- assigning means (15b) for assigning the post-processed sub-carrier symbols F(k) to an order for further processing.

**18.** Orthogonal frequency division multiplex demodulator (2) according to one of the claims 14 to 17, wherein the DFT means (14) and the second transforming means (15) are integrated in one device.

**Patentansprüche**

1.  Verfahren zum Modulieren von Subträgersymbolen F(k) in ein OFDM-Zwischenfrequenzsignal (f(n)) mit geraden und ungeraden Bestandteilen, wobei das Verfahren die folgenden Schritte umfasst:

    - Transformieren einer Anzahl N der Subträgersymbole F(k) in vorverarbeitete Subträgersymbole Z(k) gemäß der Funktion:

    $$Z(k) = \frac{1}{2} \cdot [F(k) + F(N-k)^*] + \frac{1}{2} \cdot j \cdot [F(k) - F(N-k)^*] e^{+j\pi k/N},$$

    mit k=0...N-1;
    - Anwenden einer komplexen inversen diskreten N-Punkt-Fouriertransformation, IDFT, auf die vorverarbeiteten Subträgersymbole Z(k) zur Erzeugung komplexer Ausgabesymbole z(n) und
    - Transformieren der komplexen Ausgabesymbole z(n) in das OFDM-Zwischenfrequenzsignal (f(n)) durch Multiplexen des Real- und Imaginärteils der komplexen Ausgabesymbole z(n) in gerade und ungerade Bestandteile des OFDM-Zwischenfrequenzsignals (f(n)).

2.  Verfahren nach Anspruch 1, das ferner die folgenden Schritte umfasst:

    - Zuordnen der Subträgersymbole F(k) zu einem Spektrum F(i) mit i=0...2N-1 des OFDM-Zwischenfrequenzsignals (f(n)), wobei negative Frequenzgehalte aus der Symmetrieeigenschaft der Spektren realer Sequenzen F(i)=F(2N-i)* abgeleitet werden können;
    - Umwandeln der Subträgersymbole F(k) mit k=0...N-1 in die vorverarbeiteten komplexen Subträgersymbole Z(k) unter Verwendung der Symmetrieeigenschaft der Spektren realer Sequenzen, wobei Z(k)=X(k)+j*Y(k) ist und X(k) und Y(k) die Spektren realer Sequenzen x(n) und y(n) definieren und
    - Anwenden der komplexen inversen diskreten Fouriertransformation, IDFT, um die vorverarbeiteten komplexen Subträgersymbole Z(k) in die komplexen Ausgabesymbole z(n) = x(n)+j*y(n) umzuwandeln.

3.  Verfahren nach einem der vorhergehenden Ansprüche, bei dem die komplexe inverse diskrete Fouriertransformation, IDFT, als inverse schnelle Fouriertransformation, IFFT, durchgeführt wird.

4.  Verfahren zum Demodulieren eines OFDM-Zwischenfrequenzsignals (f(n)) mit geraden und ungeraden Bestandteilen in nachverarbeitete Subträgersymbole F(k), wobei das Verfahren die folgenden Schritte umfasst:

    - Transformieren des OFDM-Zwischenfrequenzsignals (f(n)) in komplexe Eingabesymbole z(n) durch Demultiplexen der geraden und ungeraden Bestandteile des OFDM-Zwischenfrequenzsignals (f(n)) in die Real- und Imaginärteile der komplexen Eingabesymbole z(n)=x(n)+j*y(n) mit x(n)=f(2n) und y(n)=f(2n-1) mit n=0...N-1;
    - Anwenden einer komplexen diskreten Fouriertransformation, DFT, auf die komplexen Eingabesymbole z(n) zur Erzeugung komplexer DFT-Ausgabesymbole Z(k) und
    - Transformieren der komplexen DFT-Ausgabesymbole Z(k) in die nachverarbeiteten Subträgersymbole F(k) gemäß der Funktion:

    $$F(k) = \frac{1}{2} \cdot [Z(k) + Z(N-k)^*] - \frac{1}{2} \cdot j \cdot [Z(k) - Z(N-k)^*] e^{-j\pi k/N}$$

    mit k=0...N-1.

5.  Verfahren nach Anspruch 4, bei dem die komplexe diskrete Fouriertransformation, DFT, als schnelle Fouriertransformation, FFT, durchgeführt wird.

6. Verfahren nach einem der Ansprüche 4 oder 5, das ferner die folgenden Schritte umfasst:

   - Anwenden der komplexen diskreten Fouriertransformation, DFT, um die komplexen Eingabesymbole z(n) in die komplexen DFT-Ausgabesymbole Z(k)=X(k)+j*Y(k) mit k=0...N-1 umzuwandeln, wobei X(k) und Y(k) die Spektren der realen Sequenzen x(n) und y(n) sind;
   - Nachverarbeiten der komplexen DFT-Ausgabesymbole Z(k) mit k=1...N-1 in die nachverarbeiteten Subträgersymbole $F(k)=X(k)+e^{-j\pi k/N}\cdot Y(k)$ des OFDM-Zwischenfrequenzsignals (f(n)) und
   - Zuordnen der nachverarbeiteten Subträgersymbole F(k) zu einer Reihenfolge zur weiteren Bearbeitung.

7. Computerprogrammelement, das Programmcodemittel umfasst zum Durchführen des Verfahrens nach einem der Ansprüche 1 bis 7, wenn das Programm auf einem Computer läuft.

8. Computerpragrammprodukt, das auf einem computergeeigneten Medium gespeichert ist und computerlesbare Programmmittel umfasst, die einen Computer zum Durchführen des Verfahrens nach einem der Ansprüche 1 bis 7 veranlassen.

9. OFDM-Modulator (1) zum Modulieren von Subträgersymbolen F(k) in ein OFDM-Zwischenfrequenzsignal (f(n)) mit geraden und ungeraden Bestandteilen, wobei der Modulator Folgendes umfasst:

   - erste Transformationsmittel (10) zum Transformieren einer Anzahl N der Subträgersymbole F(k) in vorverarbeitete Subträgersymbole Z(k), die zum Ausführen der Funktion:

$$Z(k) = \frac{1}{2}\cdot[F(k)+F(N-k)^*]+\frac{1}{2}\cdot j\cdot[F(k)-F(N-k)^*]e^{+j\pi k/N},$$

   mit k=0...N-1 ausgelegt sind;
   - IDFT-Mittel (4) zum Anwenden einer komplexen inversen diskreten Fouriertransformation, IDFT, auf die vorverarbeiteten Subträgersymbole Z(k) zur Erzeugung komplexer Ausgabesymbole z(n) und
   - zweite Transformationsmittel (50), die Multiplexermittel (52) zum Multiplexen der Real- und Imaginärteile der komplexen Ausgabesymbole z(n) in gerade und ungerade Bestandteile des OFDM-Zwischenfrequenzsignals (f(n)) umfassen.

10. OFDM-Modulator (1) nach Anspruch 9, bei dem die IDFT-Mittel (4) die Funktionalität zum Durchführen einer inversen schnellen Fouriertransformation, IFFT, aufweisen.

11. OFDM-Modulator (1) nach einem der Ansprüche 9 oder 10, bei dem die ersten Transformationsmittel (10) ferner Folgendes umfassen:

   - Zuordnungsmittel (10a) zum Zuordnen der Subträgersymbole F(k) zu einem Spektrum F(i) mit i=0...2N-1 des OFDM-Zwischenfrequenzsignals (f(n)), wobei negative Frequenzgehalte aus der Symmetrieeigenschaft von Spektren realer Sequenzen, F(i)=F(2N-i)*, abgeleitet werden können;
   - Umsetzermittel (10b) zum Umsetzen der Subträgersymbole F(k), mit k=0...N-1, in die vorverarbeiteten komplexen Subträgersymbole Z(k) unter Verwendung der Symmetrieeigenschaft von Spektren realer Sequenzen, wobei Z(k)=X(k)+j*Y(k) ist und X(k) und Y(k) die Spektren realer Sequenzen x(n) und y(n) definieren.

12. OFDM-Modulator (1) nach einem der Ansprüche 9 bis 11, bei dem die IDFT-Mittel (4) zum Anwenden der komplexen inversen diskreten Fouriertransformation, IDFT, ausgelegt sind, um die vorverarbeiteten komplexen Subträgersymbole Z(k) in die komplexen Ausgabesymbole z(n)= x(n)+j*y(n) umzuwandeln.

13. OFDM-Modulator (1) nach einem der Ansprüche 9 bis 12, bei dem die ersten Transformationsmittel (10) und die IDFT-Mittel (4) in einer Einheit zusammengefasst sind.

14. OFDM-Demodulator (2) zum Demodulieren eines OFDM-Zwischenfrequenzsignals (f(n)) mit geraden und ungeraden Bestandteilen in nachverarbeitete Subträgersymbole F(k), wobei der Demodulator Folgendes umfasst:

- dritte Transformationsmittel (13), die Demultiplexermittel (13a) zum Demultiplexen der geraden und ungeraden Bestandteile des OFDM-Zwischenfrequenzsignals (f(n)) in den Real- und Imaginärteil der komplexen DFT-Eingabesymbole z(n)=x(n)+j*y(n) mit x(n)=f(2n), y(n)=f(2n+1)und n=0...N-1, umfassen;
- DFT-Mittel (14) zum Anwenden einer komplexen diskreten Fouriertransformation auf die komplexen Eingabesymbole z(n) zur Erzeugung komplexer DFT-Ausgabesymbole Z(k);
- vierte Transformationsmittel (15) zum Transformieren der komplexen DFT-Ausgabesymbole z(k) in die nachverarbeiteten Subträgersymbole F(k), die zum Ausführen der Funktion:

$$F(k) = \frac{1}{2} \cdot [Z(k) + Z(N-k)^*] - \frac{1}{2} \cdot j \cdot [Z(k) - Z(N-k)^*] e^{-j\pi k/N}$$

mit k=0...N-1 ausgelegt sind.

15. OFDM-Demodulator (2) nach Anspruch 14, bei dem die DFT-Mittel (14) die Funktionalität zum Durchführen einer schnellen Fouriertransformation, FFT, aufweisen.

16. OFDM-Demodulator (2) nach einem der Ansprüche 14 oder 15, bei dem die DFT-Mittel (14) zum Anwenden der komplexen diskreten Transformation, DFT, ausgelegt sind, um die komplexen Eingabesymbole z(n) in komplexe DFT-Ausgabesymbole Z(k)=X(k)+j*Y(k), mit k=0...N-1, umzuwandeln , wobei X(k) und Y(k) die Spektren der realen Sequenzen x(n) und y(n) sind.

17. OFDM-Demodulator (2) nach einem der Ansprüche 14 bis 16, bei dem die vierten Transformationsmittel (15) ferner umfassen:

- Nachverarbeitungsmittel (15a) zum Nachverarbeiten der komplexen DFT-Ausgabesymbole Z(k), mit k=1...N-1, in die nachverarbeiteten Subträgersymbole $F(k)=X(k)+e^{(-j\pi k/N)} \cdot Y(k)$ des OFDM-Zwischenfrequenzsignals (f(n));
- Zuordnungsmittel (15b) zum Zuordnen der nachverarbeiteten Subträgersymbole F(k) zu einer Reihenfolge zur weiteren Bearbeitung.

18. OFDM-Demodulator (2) nach einem der Ansprüche 14 bis 17, bei dem die DFT-Mittel (14) und die zweiten Transformationsmittel (15) in einer Einheit zusammengefasst sind.

**Revendications**

1. Un procédé de modulation de symboles de sous-porteuse F(k) en un signal OFDM à fréquence intermédiaire (f(n)) ayant des échantillons pairs et impairs, le procédé comprenant les étapes consistant à :

- transformer un nombre N des symboles de sous-porteuse F(k) en des symboles de sous-porteuse Z(k) prétraités selon la fonction :

$$Z(k) = \frac{1}{2} \cdot \left[F(k) + F(N-k)^*\right] + \frac{1}{2} \cdot j \cdot \left[F(k) - F(N-k)^*\right] \cdot e^{+j\pi k/N}$$

dans laquelle k=0...N-1;
- accomplir une transformation de Fourier discrète inverse, IDFT, à N points, complexe, sur les symboles de sous-porteuse Z(k) prétraités, pour générer des symboles de sortie z(n) complexes; et
- transformer les symboles de sortie z(n) complexes en signal OFDM à fréquence intermédiaire (f(n)), en multiplexant les parties réelles et imaginaires des symboles de sortie z(n) complexes en des échantillons pairs et impairs du signal OFDM à fréquence intermédiaire (f(n)).

2. Procédé selon la revendication 1, comprenant en outre les étapes consistant à :

- affecter les symboles de sous-porteuse F(k) à un spectre F(i) avec i=0...2N-1 du signal OFDM à fréquence intermédiaire (f(n)), les contenus à fréquence négative étant dérivables d'après la propriété de symétrie des spectres des séquences réelles, F(i)=F(2N-i)*;
- convertir les symboles de sous-porteuse F(k), avec k=0...N-1, en symboles de sous-porteuse Z(k) complexes prétraités, en utilisant la propriété de symétrie des spectres des séquences réelles, dans laquelle Z(k)=X(k)+j*Y(k), avec X(k) et Y(k) définissant les spectres des séquences réelles x(n) et y(n); et
- exécuter la transformation de Fourier discrète inverse, IDFT, complexe, des symboles de sous-porteuse complexes Z(k) prétraités en les symboles de sortie complexes z(n)= x(n)+j*y(n).

**3.** Procédé selon l'une quelconque des revendications précédentes dans lequel la transformation de Fourier discrète inverse complexe, IDFT, est exécutée en tant que transformation de Fourier rapide inverse IFFT.

**4.** Un procédé de démodulation d'un signal OFDM (f(n)) à fréquence intermédiaire, ayant des échantillons pairs et impairs, en des symboles de sous-porteuse F(k) post-traités, le procédé comprenant les étapes consistant à :

- transformer le signal OFDM (f(n)) à fréquence intermédiaire en des symboles d'entrée z(n) complexes, par dé-multiplexage des échantillons pairs et impairs du signal OFDM (f(n)) à fréquence intermédiaire sur les parties réelles et imaginaires des symboles d'entrée complexes z(n)=x(n)+j*y(n) avec x(n)=f(2n) et y(n)=f(2n+1) avec n=0...N-1;
- exécuter une transformation de Fourier discrète complexe DFT, sur les symboles d'entrée z(n) complexes pour générer des symboles de sortie DFT Z(k) complexes; et
- transformer les symboles de sortie DFT Z(k) complexes en symboles de sous-porteuse F(k) post-traités selon la fonction :

$$F(k) = \frac{1}{2} \cdot \left[ Z(k) + Z(N-k)^* \right] + \frac{1}{2} \cdot j \cdot \left[ Z(k) - Z(N-k)^* \right] \cdot e^{-j\pi k/N}$$

avec k=O...N-1.

**5.** Procédé selon la revendication 4, dans lequel la transformation de Fourier discrète complexe, DFT, est exécutée en tant que transformation de Fourier rapide FFT.

**6.** Procédé selon l'une des revendications 4 ou 5, comprenant en outre les étapes consistant à :

- exécuter la transformation de Fourier discrète, DFT, complexe des symboles d'entrée z(n) complexes en les symboles de sortie DFT complexes z(k)=X(k)+j*Y(k) avec k=0...N-1, X(k) et Y(k) étant les spectres des séquences réelles x(n) et y(n);
- post-traiter les symboles de sortie Z(k) DFT complexes avec k=1...N-1 en les symboles de sous-porteuse F(k)=X(k)+e^{-jπk/N} •Y(k) du signal OFDM (f(n)) à fréquence intermédiaire; et
- affecter les symboles de sous-porteuse F(k) post-traités à un ordre pour la suite du traitement.

**7.** Un élément de programme pour ordinateur comprenant des moyens de code de programme pour mettre en oeuvre de procédé selon l'une quelconques des revendications 1 à 7, lorsque ledit programme fonctionne sur un ordinateur.

**8.** Un produit de programme pour ordinateur stocké sur un support utilisable par un ordinateur comprenant des moyens de programme lisibles par ordinateurs, pour qu'un ordinateur mette en oeuvre le procédé selon l'une quelconque des revendications 1 à 7.

**9.** Un Modulateur multiplex à division de fréquence orthogonale (1), pour moduler des symboles de sous-porteuse F(k) en un signal OFDM (f(n)) à fréquence intermédiaire ayant des échantillons pairs et impaires, le modulateur comprenant :

- des premiers moyens de transformation (10), pour transformer un nombre N des symboles de sous-porteuse F(k) en symboles de sous-porteuse z(k) prétraités, adaptés pour exécuter la fonction :

$$Z(k) = \frac{1}{2} \cdot \left[ F(k) + F(N-k)^{*} \right] + \frac{1}{2} \cdot j \cdot \left[ F(k) - F(N-k)^{*} \right] \cdot e^{+j\pi k/N}$$

avec k=0...N-1;
- des moyens IDFT (4), pour exécuter une transformation de Fourier discrète inverse, IDFT, complexe, sur les symboles de sous-porteuse Z(k) prétraités, pour générer des symboles de sortie z(n) complexes; et
- des deuxièmes moyens de transformation (50), comprenant des moyens de multiplexage (52), pour multiplexer les parties réelles et imaginaires des symboles de sortie z(n) complexes en des échantillons pairs et impairs du signal OFDM (f(n)) à fréquence intermédiaire.

10. Modulateur multiplex à division de fréquence orthogonal (1) selon la revendication 9, dans lequel les moyens IDFT (4) présentent la fonctionnalité d'accomplir une transformation de Fourier rapide inverse IFFT.

11. Modulateur multiplex à division de fréquence orthogonal (1) selon l'une des revendications 9 ou 10, dans lequel les premiers moyens de transformation (10) comprennent en outre :

- des moyens d'affectation (10a), pour affecter les symboles de sous-porteuse F(k) à un spectre F(i) avec i=O... 2N-1 du signal OFDM (f(n)) à fréquence intermédiaire, des contenus négatifs étant dérivables d'après la propriété de symétrie des spectres des séquences réelles, F(i)=F(2N-i)*;
- des moyens de convertisseur (10b), pour convertir des symboles de sous-porteuse F(k), avec k=0...N-1, en symboles de sous-porteuse Z(k) complexes prétraités, en utilisant la propriété de symétrie des spectres des séquences réelles dans laquelle Z(k)=X(k)+j*Y(k), avec X(k) et Y(k) définissant les spectres des séquences réelles x(n) et y(n).

12. Modulateur multiplex à division de fréquence orthogonal (1) selon l'une des revendications 9 à 11, dans lequel les moyens IDFT (4) sont adaptés pour exécuter la transformation de Fourier discrète inverse complexe, IDFT, des symboles de sous-porteuse Z(k) complexes prétraités en les symboles de sortie z(n) = x(n)+j*y(n) complexes.

13. Modulateur multiplex à division de fréquence orthogonal (1) selon l'une des revendications 9 à 12, dans lesquels les premiers moyens de transformation (10) et les moyens IDFT (4) sont intégrés en un dispositif.

14. Un démodulateur multiplex à division de fréquence orthogonal (2), pour démoduler un signal OFDM à fréquence intermédiaire (f(n)) ayant des échantillons pairs et impairs en des symboles de sous-porteuse F(k) post-traités, le démodulateur comprenant :

- des troisièmes moyens de transformation (13), comprenant des moyens démultiplexeur (13a), pour démultiplexer les échantillons pairs et impairs du signal OFDM (f(n)) à fréquence intermédiaire, sur les parties réelles et imaginaires des symboles d'entrée DFT complexes z(n)=x(n)+j*y(n) avec x(n)=f(2n) et y(n)=f(2n+1), avec n=0...N-1;
- des moyens DFT (14), pour effectuer une transformation de Fourier discrète complexe sur les symboles d'entrée z(n) complexes, pour générer des symboles de sortie DFT Z(k) complexes;
- des quatrièmes moyens de transformation (15), pour transformer les symboles de sortie DFT Z(k) complexe en symboles de sous-porteuse F(k) post-traités, adaptés pour effectuer la fonction :

$$F(k) = \frac{1}{2} \cdot \left[ Z(k) + Z(N-k)^{*} \right] - \frac{1}{2} \cdot j \cdot \left[ Z(k) - Z(N-k)^{*} \right] \cdot e^{-j\pi k/N}$$

avec k=0...N-1.

15. Démodulateur multiplex à division de fréquence orthogonal (2) selon la revendication 14, dans lequel les moyens DFT (4) présentent la fonctionnalité d'effectuer une transformation de Fourier rapide FFT.

16. Démodulateur multiplex à division de fréquence orthogonal (2), selon la revendication 14 ou 15, dans lequel les moyens DFT (14) sont adaptés pour effectuer la transformation de Fourier discrète, complexe, DFT, des symboles d'entrée z(n) complexes en des symboles de sortie DFT Z(k)=X(k)+j*Y(k) complexes, avec k=0...N-1, dans lequel X(k) et Y(k) sont les spectres des séquences réelles x(n) et y(n).

17. Démodulateur multiplex à division de fréquence orthogonal (2), selon l'une quelconque des revendications 14 à 16, dans lesquels les quatrièmes moyens de transformation (15) comprennent en outre :

- des moyens de post-traitement (15a), pour post-traiter les symboles de sortie DFT Z(k) complexes avec k=1...N-1, en les symboles de sous-porteuse F(k)=X(k)+exp(-j*pi*k/n)*Y(k) du signal OFDM (f(n)) à fréquence intermédiaire ;
- des moyens d'affectation (15b) pour affecter les symboles de sous-porteuse F(k) post-traités à un ordre pour la suite du traitement.

18. Démodulateur multiplex à division de fréquence orthogonal (2), selon l'une quelconque des revendications 14 à 17, dans lequel les moyens DFT (14) et les deuxièmes moyens de transformation (15) sont intégrés en un dispositif.

Fig. 1

**Fig. 2**

EP 1 702 445 B1

(a)

(b)

**Fig. 3**

Fig. 4